(19) Europäisches Patentamt / European Patent Office / Office européen des brevets

(11) **EP 2 427 738 B1**

(12) **EUROPÄISCHE PATENTSCHRIFT**

(45) Veröffentlichungstag und Bekanntmachung des Hinweises auf die Patenterteilung:
**11.06.2014  Patentblatt 2014/24**

(21) Anmeldenummer: **10713678.0**

(22) Anmeldetag: **15.04.2010**

(51) Int Cl.:
*G01F 25/00* *(2006.01)*      *G01F 1/84* *(2006.01)*

(86) Internationale Anmeldenummer:
**PCT/EP2010/054995**

(87) Internationale Veröffentlichungsnummer:
**WO 2010/127933 (11.11.2010 Gazette 2010/45)**

(54) **VERFAHREN ZUM DETEKTIEREN EINER VERSTOPFUNG IN EINEM CORIOLIS-DURCHFLUSSMESSGERÄT**

METHOD FOR DETECTING OF A CLOGGING IN A CORIOLIS FLOWMETER.

MÉTHODE POUR LA DÉTECTION D'UN COLMATAGE DANS UN DÉBITMÈTRE  CORIOLIS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **08.05.2009   DE 102009002941**

(43) Veröffentlichungstag der Anmeldung:
**14.03.2012   Patentblatt 2012/11**

(73) Patentinhaber: **Endress+Hauser Flowtec AG**
**4153 Reinach (CH)**

(72) Erfinder:
• **RIEDER, Alfred**
**84032 Landshut (DE)**

• **DRAHM, Wolfgang**
**85438 Erding (DE)**
• **ZHU, Hao**
**D-85354 Freising (DE)**
• **BRAUN, Marcel**
**79594 Inzlingen (DE)**

(74) Vertreter: **Andres, Angelika Maria**
**Endress+Hauser(DE)Holding,**
**Patserve,**
**Colmarer Strasse 6**
**79576 Weil am Rhein (DE)**

(56) Entgegenhaltungen:
JP-A- 2003 194 610      US-A1- 2004 064 271
US-A1- 2008 047 362      US-A1- 2008 141 789
US-B2- 7 421 350

**Beschreibung**

Die vorliegende Erfindung betrifft ein Verfahren zum Detektieren einer Verstopfung eines Messrohres eines Coriolis-Durchflussmessgerätes, wobei das Coriolis-Durchflussmessgerät in eine Rohrleitung einsetzbar ist und derart ausgebildet ist, dass durch dieses eine physikalische Messgröße, insbesondere ein Massedurchfluss, eine Viskosität und/oder eine Dichte, eines, in der Rohrleitung strömenden Fluides bestimmbar ist, und wobei das Coriolis-Durchflussmessgerät mindestens zwei Messrohre aufweist, auf die ein, in der Rohrleitung strömendes Fluid aufteilbar ist.

Nach dem Coriolis-Prinzip wirkt immer dann, wenn sich in einem System eine rotierende und eine, zumindest teilweise senkrecht zu der Rotationsachse verlaufende, geradlinige Massebewegung überlagern, auf die bewegte Masse eine zusätzliche Kraft, die als Coriolis-Kraft bezeichnet wird. Dieser Effekt wird in bekannter Weise in Coriolis-Durchflussmessgeräten ausgenutzt, beispielsweise um einen Massedurchfluss eines, in einer Rohrleitung strömenden Fluides zu bestimmen. Coriolis-Durchflussmessgeräte weisen in der Regel eines oder mehrere Messrohre auf, wobei diese, je nach Gerätetyp, in unterschiedlichen Konfigurationen ausgebildet sein können. Das System aus dem mindestens einen Messrohr bildet ein Schwingungssystem, das je nach Messrohr-Konfiguration entsprechende natürliche Schingungsmodi, wie beispielsweise Biegeschwingungen (Grundmodus sowie Modi höherer Ordnung), Torsionsschwingungen (Grundmodus sowie Modi höherer Ordnung), etc., aufweist.

Ein Coriolis-Durchflussmessgerät wird im Einsatz in eine, von einem Fluid durchströmte Rohrleitung derart eingesetzt, dass das mindestens eine Messrohr von dem Fluid durchströmt wird. Zur Bestimmung eines Massedurchflusses des Fluides wird das mindestens eine Messrohr durch mindestens einen Erreger zu Schwingungen angeregt. Der mindestens eine Erreger kann dabei beispielsweise durch einen elektromechanischen Erreger, der auf das betreffende Messrohr eine einer angelegten Spannung entsprechende Kraft ausübt, insbesondere einen elektrodynamischen Erreger, gebildet werden. In der Regel wird das Schwingungssystem auf einer Resonanzfrequenz desselben (beispielsweise des Grundmodus der Biegeschwingung) angeregt. Wird das mindestens eine Messrohr nicht von einem Fluid durchströmt, so schwingt das gesamte Messrohr in Phase. Wird das mindestens eine Messrohr von einem Fluid durchströmt, so wirkt auf die bewegte Masse (des Fluides) eine Coriolis-Kraft. Dies führt dazu, dass das Messrohr aufgrund der Coriolis-Kraft zusätzlich verformt wird und eine Phasenverschiebung entlang der Erstreckungsrichtung des jeweiligen Messrohres auftritt. Die Phasenverschiebung entlang eines Messrohres kann durch entsprechende Sensoren, die wiederum durch elektromechanische, insbesondere elektrodynamische, Sensoren gebildet werden können und die entlang der Erstreckungsrichtung des Messrohres beabstandet voneinander angeordnet sind, gebildet werden. Die Phasenverschiebung, die über die Sensoren erfassbar ist, ist proportional zu dem Massedurchfluss durch das Messrohr.

Zusätzlich oder alternativ zu dem Massedurchfluss kann durch Coriolis-Durchflussmessgeräte auch die Dichte des strömenden Fluides bestimmt werden. Hierbei wird das Prinzip ausgenutzt, dass die Resonanzfrequenz (beispielsweise des Grundmodus der Biegeschwingung) von der schwingenden Masse und damit von der Dichte des strömenden Fluides abhängt. Durch Nachregeln der Anregungsfrequenz derart, dass das Schwingungssystem in seiner Resonanzfrequenz angeregt wird, kann die Resonanzfrequenz und daraus wiederum die Dichte des strömenden Fluides bestimmt werden. Zusätzlich oder alternativ können durch Coriolis-Durchflussmessgeräte auch noch weitere physikalische Messgrößen des strömenden Fluides, wie beispielsweise eine Viskosität desselben, bestimmt werden.

Häufig werden Coriolis-Durchflussmessgeräte eingesetzt, die zwei, parallel in dem jeweiligen Strömungspfad eingesetzte Messrohre aufweisen, auf die ein in der Rohrleitung strömendes Fluid aufgeteilt wird. In der Regel werden die beiden Messrohre im Einsatz gegenphasig zueinander angeregt. Auf diese Weise gelingt eine Entkopplung des Schwingungssystems, das die zwei Messrohre aufweist, von externen Vibrationseinflüssen. Ferner kann das Coriolis-Durchflussmessgerät auch mehr als zwei Messrohre, die beispielsweise parallel in dem jeweiligen Strömungspfad eingesetzt sind, aufweisen. In industriellen Anwendungen, insbesondere bei dem Einsatz von hochviskosen oder inhomogenen Fluiden, kann dabei der Fall auftreten, dass bei solchen Coriolis-Durchflussmessgeräten (mindestens) eines der Messrohre verstopft ist. Solch eine Verstopfung ist schwierig zu detektieren, da durch das mindestens eine, verbleibende freie Messrohr weiterhin ein Durchfluss ermöglicht wird. Insbesondere im Hinblick auf hygienische Anforderungen ist es jedoch wünschenswert, eine Verstopfung eines Messrohres in Coriolis-Durchflussmessgeräten möglichst verlässlich und frühzeitig zu detektieren.

In der Druckschrift US 7,421,350 B2 ist ein Durchflussmessgerät beschrieben, durch das ein in einer Messrohranordnung verbleibendes Material detektierbar ist. Hierzu wird, in der Regel nach dem Entleeren des Durchflussmessgerätes, die Messrohranordnung zu Schwingungen angeregt und die Response der Schwingungen erfasst. Überschreitet die Response der Schwingungen einen Grenzwert, so wird festgestellt, dass in der Messrohranordnung noch verbleibendes Material enthalten ist. Gemäß einer, in der Druckschrift US 7,421,350 B2 beschriebenen Variante wird für das Durchflussmessgerät eine Standard-Resonanzfrequenz bestimmt, die einem vollständig entleerten Zustand der Messrohranordnung entspricht. Weicht die, nach einem Entleeren der Messrohranordnung bestimmte Resonanzfrequenz um mehr als einen vorbestimmten Wert von der Standard-Resonanzfrequenz ab, so wird festgestellt, dass in der Messrohranordnung noch verbleibendes Material enthalten ist. Die oberhalb erläuterten Schritte zur Feststellung, ob die Messrohranordnung vollständig entleert ist, werden in der Regel erst nach einem Entleeren des Durchflussmessgerätes ausgeführt. Eine zeitnahe Detektion einer Verstopfung ist dementsprechend nicht möglich. Insbesondere in einem Zustand, in dem die Messrohranordnung von Fluid durchströmt wird, ist eine Verschiebung der Resonanzfrequenz kein verlässlicher Indikator für das Auftreten einer Verstopfung. Beispielsweise kann solch eine Verschiebung der Resonanzfrequenz auch durch eine veränderte Dichte des Fluides hervorgerufen werden.

Dementsprechend besteht die Aufgabe der vorliegenden Erfindung darin, ein Coriolis-Durchflussmessgerät sowie ein Verfahren bereitzustellen, durch das eine Verstopfung eines Messrohres in solch einem Coriolis-Durchflussmessgerät, das mindestens zwei Messrohre aufweist, möglichst verlässlich und frühzeitig detektierbar ist.

Die Aufgabe wird durch ein Verfahren zum Detektieren einer Verstopfung eines Messrohres eines Coriolis-Durchflussmessgerätes gemäß Anspruch 1 sowie durch ein Coriolis-Durchflussmessgerät gemäß Anspruch 15 gelöst. Vorteilhafte Weiterbildungen der Erfindung sind in den Unteransprüchen angegeben.

Die vorliegende Erfindung betrifft ein Verfahren zum Detektieren einer Verstopfung eines Messrohres eines Coriolis-Durchflussmessgerätes, wobei das Coriolis-Durchflussmessgerät in eine Rohrleitung einsetzbar ist und derart ausgebildet ist, dass durch dieses eine physikalische Messgröße, insbesondere ein Massedurchfluss, eine Viskosität und/oder eine Dichte, eines, in der Rohrleitung strömenden Fluides (z.B. Flüssigkeit, Gas) bestimmbar ist. Das Coriolis-Durchflussmessgerät weist dabei mindestens zwei Messrohre auf, auf die ein, in der Rohrleitung strömendes Fluid aufteilbar ist. Das Verfahren weist nachfolgende Schritte auf:

A) Anregen der mindestens zwei Messrohre zu mechanischen Schwingungen durch mindestens einen Erreger;
B) Erfassen von mechanischen Schwingungen der Messrohre und Erzeugen mindestens eines, die mechanischen Schwingungen repräsentierenden Messsignals durch mindestens einen Sensor;
C) Analysieren mindestens eines erzeugten Messsignals auf das Auftreten einer Abweichung einer Resonanzfrequenz eines Messrohres gegenüber einer Resonanzfrequenz des mindestens einen anderen Messrohres; und
D) Feststellen einer Verstopfung eines Messrohres bei Auftreten einer solchen Abweichung.

Die vorliegende Erfindung ermöglicht eine zeitnahe Detektion einer Verstopfung eines Messrohres des Coriolis-Durchflussmessgerätes, da das Verfahren auch in Betriebszuständen, in denen das Coriolis-Durchflussmessgerät von Fluid durchströmt wird, durchführbar ist. Das erfindungsgemäße Verfahren basiert auf der Annahme, dass bei Auftreten einer Verstopfung eines Messrohres zwischen den mindestens zwei Messrohren eine Asymmetrie bezüglich der Gewichtsverteilung und dementsprechend auch bezüglich des Schwingungsverhaltens der einzelnen Messrohre vorliegt. Über das Schwingungsverhalten der Messrohre kann dann wiederum auf das Vorliegen einer Verstopfung geschlossen werden.

Dabei wurde in Experimenten festgestellt, dass in den meisten Fällen, in denen eine Verstopfung eines Messrohres auftritt, gleichzeitig auch eine solche Asymmetrie bezüglich der Gewichtsverteilung vorliegt. Beispielsweise tritt eine solche Asymmetrie in den nachfolgenden Fällen auf:

- Ein Messrohr ist mit einem anderen Fluid als das mindestens eine andere Messrohr gefüllt. Dieser Fall tritt insbesondere dann auf, wenn das verstopfte Messrohr noch mit dem Fluid der vorangehenden Anwendung gefüllt ist.
- In dem verstopften Messrohr sind Gasblasen enthalten, die nicht abtransportiert werden, während das mindestens eine verbleibende Messrohr vollständig mit Flüssigkeit gefüllt ist.
- Das Material, das die Verstopfung in einem Messrohr verursacht, hat eine andere Dichte als das jeweilige Fluid.
- Nach einem Entleeren des Coriolis-Durchflussmessgerätes ist das verstopfte Messrohr noch mit Material gefüllt, während das andere Messrohr vollständig entleert ist.

Dementsprechend kann durch das erfindungsgemäße Verfahren in vielen Anwendungen zuverlässig eine Verstopfung eines Messrohres detektiert werden.

Die konkrete Konfiguration der Messrohre ist nicht entscheidend für die vorliegende Erfindung. Insbesondere können die Messrohre jeweils geradlinig, bogenförmig oder anderweitig gekrümmt verlaufen. Vorzugsweise sind die Messrohre jeweils symmetrisch zueinander ausgebildet und weisen dementsprechend (bei identischer Befüllung) das gleiche Schwingungsverhalten und damit auch die gleichen Resonanzfrequenzen auf. Ist dies nicht der Fall, so muss in Schritt C das Messsignal auf das Verschieben bzw. auf eine Vergrößerung der Differenz einer Resonanzfrequenz eines Messrohres gegenüber einer Resonanzfrequenz des mindestens einen anderen Messrohres hin analysiert werden. Ferner ist vorzugsweise vorgesehen, dass das Coriolis-Durchflussmessgerät genau zwei Messrohre aufweist. Das Fluid wird vorzugsweise durch eine Flüssigkeit gebildet, die je nach Anwendung unterschiedliche Viskositäten aufweisen kann und gegebenenfalls auch Feststoffe und/oder Gaseinschlüsse mitführen kann.

Werden bei dem Schritt des Erfassens (Schritt B)) mehrere Messsignale (beispielsweise durch mehrere Sensoren) bereitgestellt, so kann in Schritt C) eines oder mehrere dieser Messsignale analysiert werden. Vorzugsweise werden die Schritte des Analysierens (Schritt C)) und des Feststellens (Schritt D)) in dem Coriolis-Durchflussmessgerät, insbesondere durch eine entsprechend ausgebildete Elektronik des Coriolis-Durchflussmessgerätes, (analog und/oder digital) durchgeführt. Alternativ können diese Schritte vollständig oder teilweise auch durch eine externe datenverarbeitende Einheit, an welche die entsprechenden Messsignale bzw. Informationen übermittelt werden (beispielsweise über ein Netzwerksystem), durchgeführt werden. Wird in Schritt D) eine Verstopfung eines Messrohres festgestellt, so kann dies einem Benutzer auf dem Coriolis-Durchflussmessgerät und/oder einer externen datenverarbeitenden Einheit (akustisch und/oder optisch) angezeigt werden, bzw. ein entsprechender Alarm ausgelöst werden.

Gemäß einer vorteilhaften Weiterbildung sind die mindestens zwei Messrohre mechanisch aneinander gekoppelt und bilden ein Schwingungssystem. Solch eine mechanische Kopplung führt dazu, dass das Schwingungsverhalten eines Messrohres jeweils auch durch das Schwingungsverhalten des mindestens einen anderen Messrohres beeinflusst wird. Eine mechanische Kopplung kann insbesondere durch mindestens eine mechanische Verbindung der mindestens zwei Messrohre, die insbesondere eingangsseitig und ausgangsseitig der Messrohre vorgesehen sein kann, gebildet werden. In der Regel sind die Messrohre von bekannten Coriolis-Durchflussmessgeräten mechanisch aneinander gekoppelt.

Gemäß einer vorteilhaften Weiterbildung werden die mindestens zwei Messrohre bei dem Schritt des Anregens gemeinsam angeregt. Dies ermöglicht, dass die Anregung der Messrohre durch einen oder mehrere gemeinsame(n) Erreger erfolgt. Insbesondere ist vorzugsweise vorgesehen, dass zwei Messrohre in jeweils entgegengesetzter Richtung durch Änderung von deren relativem Abstand angeregt werden. Eine derartige Anregung kann beispielsweise durch eine Längenänderung eines, zwischen den beiden Messrohren angeordneten Erregers erfolgen. Gemäß einer vorteilhaften Weiterbildung wird bei dem Schritt des Erfassens eine relative Abstandsänderung zwischen Messrohren, insbesondere zwischen zwei Messrohren, erfasst. In entsprechender Weise kann diese Abstandsänderung beispielsweise über eine Längenänderung eines, zwischen den beiden Messrohren angeordneten Sensors erfasst werden.

Gemäß einer vorteilhaften Weiterbildung wird bei dem Schritt des Anregens eine Anregungsfrequenz der mindestens zwei Messrohre auf eine Resonanzfrequenz eines Schwingungssystems, das die mindestens zwei Messrohre aufweist, geregelt. Insbesondere wird die Anregungsfrequenz auf die Resonanzfrequenz des Grundmodus der Biegeschwingung des Schwingungssystems geregelt.

Gemäß einer vorteilhaften Weiterbildung wird bei dem Schritt des Analysierens das Auftreten einer Abweichung der Resonanzfrequenzen dadurch festgestellt, dass in einem Frequenzspektrum eines analysierten Messsignals mindestens zwei ausgeprägte Peaks bei jeweils unterschiedlichen Frequenzen auftreten, wobei das analysierte Messsignal mechanische Schwingungen eines Schwingungssystems, das die mindestens zwei Messrohre aufweist, repräsentiert. Dementsprechend kann eine Verstopfung eines Messrohres durch Analyse des Frequenzspektrums des Messsignals einfach und zuverlässig festgestellt werden.

Die vorangehende Weiterbildung basiert darauf, dass dann, wenn aufgrund einer Verstopfung eines Messrohres eine Asymmetrie in der Gewichtsverteilung der einzelnen Messrohre vorliegt (und dementsprechend die zwei Messrohre jeweils unterschiedliche Resonanzfrequenzen aufweisen), das Schwingungssystem, das die mindestens zwei Messrohre aufweist, mindestens zwei Resonanzfrequenzen (des betreffenden Schwingungsmodus) aufweist. Beispielsweise weist ein Schwingungssystem, das durch zwei symmetrisch zueinander angeordnete Messrohre gebildet wird, bei einer vollständigen Befüllung der Messrohre mit einem ersten Medium (in einem bestimmten Schwingungsmodus) eine erste Resonanzfrequenz und bei einer vollständigen Befüllung der Messrohre mit einem zweiten Medium unterschiedlicher Dichte eine zweite Resonanzfrequenz auf. Wird nun in dem Schwingungssystem ein Messrohr mit dem ersten Medium und das zweite Messrohr mit dem zweiten Medium befüllt, so weist das Schwingungssystem (in dem betreffenden Schwingungsmodus) zwei Resonanzfrequenzen auf, wobei die eine Resonanzfrequenz nahe an der ersten Resonanzfrequenz und die andere Resonanzfrequenz nahe an der zweiten Resonanzfrequenz liegt. Dies kann unter anderem durch die oberhalb erläuterte Analyse des Frequenzspektrums des Messsignals auf mindestens zwei ausgeprägte Peaks festgestellt werden.

Unter Peak wird dabei in einem Frequenzspektrum, in dem das Schwingungs-Ansprechverhalten, wie beispielsweise die Schwingungsamplitude, über der Frequenz aufgetragen ist, ein (gegebenenfalls lokales) Maximum verstanden. Unter "zwei ausgeprägten Peaks" wird dabei verstanden, dass sich die Peaks klar unterscheiden lassen. Dies kann beispielsweise dadurch definiert werden, dass die Peaks einen vorbestimmten Mindest-Frequenzabstand aufweisen müssen und/oder dass der Graph zwischen den beiden Peaks um einen vorbestimmten Wert oder um ein vorbestimmtes Verhältnis abfallen muss. Diese Kriterien können sich dabei je nach Anwendung, insbesondere je nach den zu messenden Fluiden, unterscheiden. Gemäß einer vorteilhaften Weiterbildung wird bei dem Schritt des Analysierens das Auftreten einer Abweichung der Resonanzfrequenzen nur dann festgestellt, wenn die Frequenzdifferenz der Frequenzen, bei denen die Peaks auftreten, einen vorbestimmten Grenzwert überschreitet.

Gemäß einer vorteilhaften Weiterbildung wird das Frequenzspektrum durch Variieren der Anregungsfrequenz des mindestens einen Erregers und durch Erfassen des zugehörigen Schwingungs-Ansprechverhaltens des Schwingungssystems durch mindestens einen Sensor bereitgestellt. Vorzugsweise wird dabei die Anregungsfrequenz durch den Frequenzbereich durchgefahren, der hinsichtlich der Auswertung des Frequenzspektrums relevant ist. Auf diese Weise kann für den relevanten Frequenzbereich das Schwingungs-Ansprechverhalten des Schwingungssystems erfasst werden. Gemäß einer vorteilhaften, alternativen Weiterbildung wird das Frequenzspektrum durch Fourier-Analyse des analysierten Messsignals bereitgestellt, wobei die Anregung bei der Aufnahme des Messsignals ein sich über den relevanten Frequenzbereich erstreckendes Frequenzband als Anregungsfrequenzen aufweist. Eine solche gleichzeitige Anregung mit mehreren Frequenzen wird teilweise auch als "weißes Rauschen" (engl.: white noise) bezeichnet und betrifft insbesondere eine gleichmäßig über den relevanten Frequenzbereich verteilte Anregung.

Gemäß einer vorteilhaften Weiterbildung wird bei dem Schritt des Analysierens eine Abweichung der Resonanzfrequenzen dadurch festgestellt, dass bei Anregen der mindestens zwei Messrohre auf einer Resonanzfrequenz des Schwingungssystems, das die mindestens zwei Messrohre aufweist, eine Änderung einer Transfer-Funktion des Coriolis-Durchflussmessgerätes gegenüber der Transfer-Funktion in einem nicht-verstopften Zustand auftritt. Die Transfer-Funktion setzt dabei eine Anregungs-Eingangsgröße zu einem, die mechanischen Schwingungen (des Schwingungssystems) repräsentierenden Messsignal in Beziehung. Die Anregungs-Eingangsgröße ist dabei eine Größe, die spezifisch für die Anregung (über den mindestens einen Erreger) ist, wie beispielsweise eine, an den Erreger bereitgestellte bzw. angelegte Anregungsspannung oder auch eine Anregungsenergie. Das, die mechanischen Schwingungen (des Schwingungssystems) repräsentierende Messsignal beschreibt dabei das Schwingungsverhalten und kann beispielsweise durch eine, von dem mindestens einen Sensor bereitgestellte Sensorspannung gebildet werden.

Durch die Transfer-Funktion kann dementsprechend für verschiedene Anregungs-Eingangsgrößen das entsprechende, die mechanischen Schwingungen (des Schwingungssystems) repräsentierende Messsignal erhalten bzw. berechnet werden. Die Transfer-Funktion kann in entsprechender Weise auch in umgekehrter Richtung angewendet werden. Insbesondere beschreibt die Transfer-Funktion das Ansprechverhalten des Schwingungssystems, wobei die jeweiligen, gerätespezifischen Parameter, wie beispielsweise Eigenschaften des mindestens einen Erregers und des mindestens einen Sensors, die Nachgiebigkeit (bzw. Steifigkeit) des Schwingungssystems, etc. berücksichtigt werden. In die Transfer-Funktion geht unter anderem die Resonanzfrequenz des Schwingungssystems ein. Wie oberhalb erläutert wird, weist das Schwingungssystem, wenn in den Messrohren aufgrund einer Verstopfung eine Asymmetrie bezüglich der Gewichtsverteilung auftritt, zwei (oder bei mehr als zwei Messrohren gegebenenfalls noch mehrere) Resonanzfrequenzen auf. Diese Resonanzfrequenzen unterscheiden sich von der Resonanzfrequenz des Schwingungssystems, wenn dieses nicht verstopft ist (beispielsweise wenn sämtliche Messrohre vollständig entleert oder jeweils mit dem gleichen Fluid gefüllt sind). Aufgrund dieses geänderten Schwingungsverhaltens tritt im Falle einer Verstopfung eine Änderung der Transfer-Funktion des Coriolis-Durchflussmessgerätes auf. Anhand einer Änderung der Transfer-Funktion kann folglich eine Verstopfung eines Messrohres festgestellt werden. Vorzugsweise wird dabei, wie oberhalb bei der Weiterbildung angegeben ist, die Anregungsfrequenz derart gewählt, dass sie einer Resonanzfrequenz des Schwingungssystems entspricht.

Gemäß einer vorteilhaften Weiterbildung wird bei dem Schritt des Analysierens eine Abweichung der Resonanzfrequenzen dadurch festgestellt, dass bei Anregen der mindestens zwei Messrohre auf einer Resonanzfrequenz des Schwingungssystems, das die mindestens zwei Messrohre aufweist, eine Reduzierung einer, aus den erfassten, mechanischen Schwingungen der Messrohre bestimmten Nachgiebigkeit des Schwingungssystems auftritt. Die Bestimmung der Nachgiebigkeit erfolgt dabei unter Heranziehung einer, für einen nicht-verstopften Zustand unter Resonanzbedingungen geltenden Transfer-Funktion des Coriolis-Durchflussmessgerätes. Die Nachgiebigkeit (engl.: yieldingness), die in dem Fachgebiet allgemein bekannt ist und hier als $k_1$ bezeichnet wird, ändert sich tatsächlich nicht durch die Verstopfung eines Messrohres. Vielmehr weist in verstopftem Zustand das verstopfte Messrohr, wie oberhalb erläutert wird, aufgrund einer Asymmetrie bezüglich der Gewichtsverteilung eine andere Resonanzfrequenz als das mindestens eine, verbleibende Messrohr auf. Daraus ergibt sich ein geändertes Schwingungsverhalten des Schwingungssystems. Dieses geänderte Schwingungsverhalten wird durch die Transfer-Funktion, die für einen nicht-verstopften Zustand unter Resonanzbedingungen gilt, nicht mehr korrekt beschrieben.

Wird das Schwingungssystem in verstopftem Zustand mit einer der Resonanzfrequenzen des Schwingungssystems angeregt, so liegt diese Anregungsfrequenz näher an der Resonanzfrequenz des (mindestens) einen Messrohres als an der Resonanzfrequenz des (mindestens) einen verbleibenden Messrohres. Dies führt dazu, dass (mindestens) ein Messrohr ein relativ gutes Schwingungs-Ansprechverhalten zeigt, während das (mindestens) eine andere Messrohr ein relativ schlechtes Schwingungs-Ansprechverhalten zeigt. Ob nun das verstopfte oder das mindestens eine, nicht verstopfte Messrohr das relativ gute Schwingungs-Ansprechverhalten zeigt, hängt davon ab, auf welche Resonanzfrequenz des Schwingungssystems die Anregungsfrequenz eingestellt wird. Das Schwingungssystem weist dementsprechend ein schlechteres Schwingungs-Ansprechverhalten als in einem nicht-verstopften Zustand auf.

Die Nachgiebigkeit $k_1$ kann unter anderem, wie nachfolgend unter Bezugnahme auf die Figuren erläutert wird, (in einem nicht-verstopften Zustand) aus dem erfassten Schwingungs-Ansprechverhalten des Schwingungssystems, wenn dieses mit einer Resonanzfrequenz des Schwingungssystems angeregt wird, bestimmt werden. Dabei geht in diese Berechnung auch die Transfer-Funktion des Coriolis-Durchflussmessgerätes mit ein. Wird nun bei dieser Berechnung der Nachgiebigkeit die Transfer-Funktion, die für einen nicht-verstopften Zustand unter Resonanzbedingungen gilt und damit das Schwingungssystem in einem verstopften Zustand nicht korrekt beschreibt, herangezogen, so führt dies bei einem Zustand mit einem verstopften Messrohr dazu, dass sich daraus eine reduzierte Nachgiebigkeit des Schwingungssystems (gegenüber einem nicht-verstopften Zustand) ergibt.

Gemäß einer vorteilhaften Weiterbildung wird bei dem Schritt des Analysierens eine Abweichung der Resonanzfrequenzen dadurch festgestellt, dass bei Anregen der mindestens zwei Messrohre auf einer Resonanzfrequenz des Schwingungssystems, das die mindestens zwei Messrohre aufweist, eine Erhöhung einer, aus den erfassten, mechanischen Schwingungen der Messrohre bestimmten Steifigkeit des Schwingungssystems auftritt. Die Bestimmung der Steifigkeit erfolgt dabei unter Heranziehung einer, für einen nicht-verstopften Zustand unter Resonanzbedingungen geltenden Transfer-Funktion des Coriolis-Durchflussmessgerätes. Die Steifigkeit (engl.: stiffness) ist in dem Fachgebiet allgemein bekannt. In entsprechender Weise, wie dies oberhalb in Bezug auf die Nachgiebigkeit erläutert wird, ändert sich die Steifigkeit tatsächlich nicht durch die Verstopfung eines Messrohres. Vielmehr führt wiederum der (oberhalb erläuterte) Effekt, dass das Schwingungssystem, wenn ein Messrohr verstopft ist, ein schlechteres Schwingungs-Ansprechverhalten als in einem nicht-verstopften Zustand aufweist, dazu, dass dann, wenn die Steifigkeit gemäß den oberhalb genannten Bedingungen bestimmt wird, bei dieser Bestimmung ein erhöhter Wert für die Steifigkeit erhalten wird. Dabei gelten die oberhalb, in Bezug auf die Bestimmung der Nachgiebigkeit gemachten Erläuterungen in entsprechender Weise.

Gemäß einer vorteilhaften Weiterbildung wird bei dem Schritt des Analysierens eine Abweichung der Resonanzfrequenzen erst dann festgestellt, wenn die Differenz der bestimmten, reduzierten Nachgiebigkeit von der bestimmten Nachgiebigkeit in nicht-verstopftem Zustand und/oder wenn die Differenz der bestimmten Steifigkeit in nicht-verstopftem Zustand von der bestimmten, erhöhten Steifigkeit, einen vorbestimmten Grenzwert überschreitet. Auf diese Weise können geringfügige Änderungen der bestimmten Nachgiebigkeit und/oder Steifigkeit, die eventuell auch aufgrund anderer Ursachen hervorgerufen werden, unberücksichtigt gelassen werden. Der Grenzwert kann dabei in Abhängigkeit von der jeweiligen Anwendung, beispielsweise auch durch einen Benutzer, festgelegt werden.

Gemäß einer vorteilhaften Weiterbildung wird bei dem Schritt des Analysierens eine Abweichung der Resonanzfrequenzen nicht festgestellt, wenn Frequenzfluktuationen der Anregungsfrequenz, die auf eine Resonanzfrequenz des Schwingungssystems geregelt wird, erhöht sind, insbesondere wenn diese Frequenzfluktuationen einen vorbestimmten Grenzwert überschreiten. Wird die Nachgiebigkeit und/oder die Steifigkeit gemäß der oberhalb erläuterten Weiterbildungen bestimmt, so kann bei dieser Bestimmung eine Reduzierung der Nachgiebigkeit bzw. eine Erhöhung der Steifigkeit auch aufgrund von Gaseinschlüssen, wie beispielsweise Luftblasen, die in dem jeweiligen, strömenden Fluid mitgeführt werden und die Messrohre durchströmen, hervorgerufen werden. In diesem Fall variiert jedoch aufgrund der kurzfristigen Änderungen der Fluid-Eigenschaften auch die Resonanzfrequenz des Schwingungssystems. Dementsprechend kann dann, wenn die Bestimmung gemäß einer der oberhalb erläuterten Weiterbildungen eine reduzierte Nachgiebigkeit und/oder eine erhöhte Steifigkeit ergibt, über die Bestimmung der Frequenzfluktuationen der Resonanzfrequenz des Schwingungssystems ausgeschlossen werden, dass die reduzierte Nachgiebigkeit und/oder die erhöhte Steifigkeit durch mitgeführte Gaseinschlüsse hervorgerufen wird. Vorzugsweise wird für die Frequenzfluktuation der Resonanzfrequenz ein Grenzwert hinterlegt, der auch je nach Anwendung variieren kann. Die Frequenzfluktuation F kann beispielsweise anhand der nachfolgenden Gleichung (0) berechnet werden, wobei N die Anzahl der zur Berechnung herangezogenen Werte (z.B. verschiedener Messungen) und $f_i$ jeweils die Resonanzfrequenz bei einer einzelnen Messung i sind:

$$(0) \qquad F = \frac{1}{N} \sum_{i=1}^{N} \left| f_i - f_{i-1} \right|$$

Gemäß einer vorteilhaften Weiterbildung wird bei dem Schritt des Analysierens eine Abweichung der Resonanzfrequenzen nicht festgestellt, wenn eine Reduzierung der Nachgiebigkeit und/oder eine Erhöhung der Steifigkeit schleichend, insbesondere unterhalb eines vorbestimmten Grenzwertes innerhalb eines vorbestimmten Zeitraumes, auftritt. Auf diese Weise kann eine zunehmende Beschichtung der Rohrwand mindestens eines Messrohres oder das Auftreten abrasiver Effekte an den Messrohr-Innenwänden, die jeweils zu solch einer schleichenden bzw. kontinuierlichen Änderung der Nachgiebigkeit und/oder Steifigkeit führen können, ausgeschlossen werden. Ein weiterer Faktor, durch den die Bestimmung der Nachgiebigkeit und/oder der Steifigkeit beeinflusst wird, ist die Temperatur. Dabei ist bei vielen Coriolis-Durchflussmessgeräten bereits üblich, die Temperatur parallel zu erfassen. Dementsprechend ist vorzugsweise vorgesehen, dass auch eine entsprechende Temperatur-Kompensation der bestimmten Nachgiebigkeit und/oder der bestimmten Steifigkeit durchgeführt wird.

Die vorliegende Erfindung betrifft ferner ein Coriolis-Durchflussmessgerät, das in eine Rohrleitung einsetzbar ist und derart ausgebildet ist, dass durch dieses eine physikalische Messgröße, insbesondere ein Massedurchfluss, eine Viskosität und/oder eine Dichte eines, in der Rohrleitung strömenden Fluides bestimmbar ist. Das Coriolis-Durchflussmessgerät weist mindestens zwei Messrohre, auf die ein, in der Rohrleitung strömendes Fluid aufteilbar ist, mindestens einen Erreger, durch den die mindestens zwei Messrohre zu mechanischen Schwingungen anregbar sind, und mindestens einen Sensor, durch den mechanische Schwingungen der Messrohre erfassbar und mindestens eines, die mechanischen Schwingungen repräsentierendes Messsignal erzeugbar ist, auf. Eine Elektronik des Coriolis-Durchflussmessgerätes, durch die das mindestens eine, erzeugte Messsignal verarbeitet wird, ist dabei derart ausgebildet, dass sie mindestens ein erzeugtes Messsignal auf das Auftreten einer Abweichung einer Resonanzfrequenz eines Messrohres gegenüber einer Resonanzfrequenz des mindestens einen anderen Messrohres hin analysiert und bei Auftreten einer solchen Abweichung eine Verstopfung eines Messrohres feststellt.

Durch das erfindungsgemäße Coriolis-Durchflussmessgerät werden die oberhalb, in Bezug auf das erfindungsgemäße Verfahren erläuterten Vorteile in entsprechender Weise erzielt. Bei dem erfindungsgemäßen Coriolis-Durchflussmessgerät sind die gleichen Weiterbildungen, die oberhalb in Bezug auf das erfindungsgemäße Verfahren erläutert wurden, in entsprechender Weise realisierbar.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:

Fig. 1: eine beispielhafte Darstellung eines Coriolis-Durchflussmessgerätes mit zwei Messrohren in Seitenansicht mit teilweise abgenommenem Gehäuse;

Fig. 2: das Coriolis-Durchflussmessgerät aus Fig. 1 in perspektivischer Ansicht mit teilweise abgenommenem Gehäuse;

Fig. 3: eine Modelldarstellung eines Schwingungssystems, das zwei Messrohre aufweist;

Fig. 4: eine graphische Darstellung eines Frequenzspektrums eines analysierten Messsignals einer Messung, bei der beide Messrohre eines Coriolis-Durchflussmessgerätes mit Luft befüllt waren;

Fig. 5: eine graphische Darstellung eines Frequenzspektrums eines analysierten Messsignals einer Messung, bei der beide Messrohre eines Coriolis-Durchflussmessgerätes mit Wasser befüllt waren;

Fig. 6: eine graphische Darstellung eines Frequenzspektrums eines analysierten Messsignals einer Messung, bei der ein Messrohr eines Coriolis-Durchflussmessgerätes mit Luft und das andere Messrohr mit Wasser befüllt war;

Fig. 7: eine graphische Darstellung eines Frequenzspektrums eines analysierten Messsignals einer Messung, bei der ein Messrohr eines Coriolis-Durchflussmessgerät mit Wasser und das andere Messrohr mit Ketchup befüllt war; und

Fig. 8: eine graphische Darstellung der Dämpfung und der Nachgiebigkeit für verschiedene Messungen, die mit unterschiedlichen Befüllungen der zwei Messrohre eines Coriolis-Durchflussmessgerätes durchgeführt wurden.

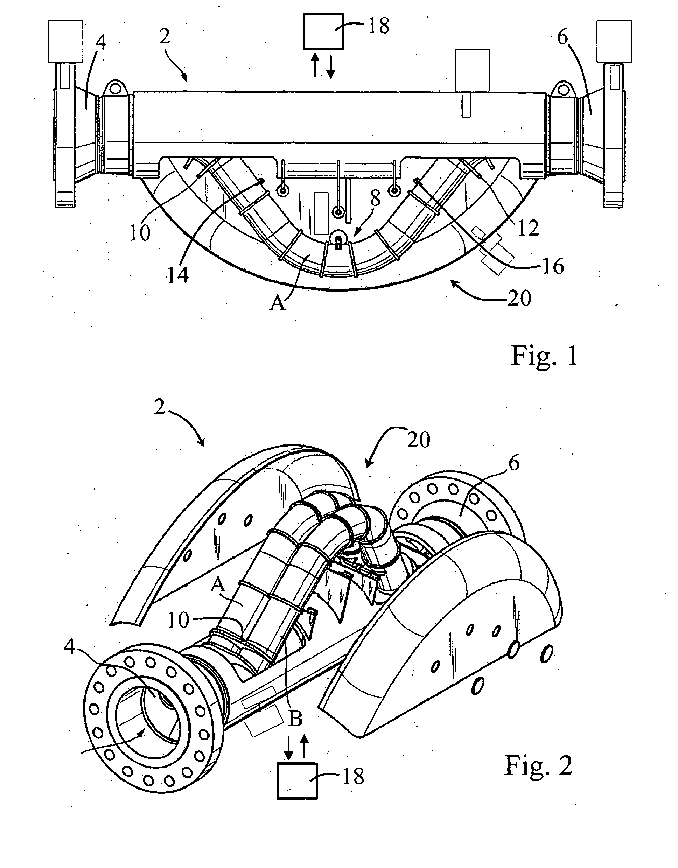

In den Figuren 1 und 2 ist beispielhaft ein Coriolis-Durchflussmessgerät 2 dargestellt, das zur Anwendung der vorliegenden Erfindung geeignet ist. Das Coriolis-Durchflussmessgerät 2 weist zwei schwingungsfähig gehalterte Messrohre A und B auf, die jeweils bogenförmig ausgebildet sind und parallel zueinander verlaufen. Das Coriolis-Durchflussmessgerät 2 ist dabei derart in eine (nicht dargestellte) Rohrleitung einsetzbar, dass die beiden Messrohre A und B von dem in der Rohrleitung strömenden Fluid durchströmt werden. Hierzu weist das Coriolis-Durchflussmessgerät 2 eingangsseitig einen Strömungsteiler 4 auf, durch den das Fluid auf die beiden Messrohre A und B aufgeteilt wird. Ausgangsseitig ist in entsprechender Weise ein Strömungsteiler 6 vorgesehen, durch den das aus den beiden Messrohren A und B austretende Fluid wieder zusammengeführt und zu einem Auslass des Coriolis-Durchflussmessgerätes 2 geleitet wird.

Zwischen den beiden Messrohren A und B erstreckt sich ein Erreger 8, der in dem vorliegenden Ausführungsbeispiel durch einen elektrodynamischen Erreger 8 gebildet wird. Der Erreger 8 ist bei dem vorliegenden Ausführungsbeispiel an einem Umkehrpunkt des Bogens, der jeweils durch die beiden Messrohre A und B gebildet wird, angeordnet. Der Erreger 8 ist derart ausgebildet, dass durch Anlegen einer elektrischen Anregungsspannung seine Länge verändert wird. Durch Anlegen einer entsprechenden, periodischen elektrischen Anregungsspannung an den Erreger 8 können die beiden Messrohre A und B periodisch auseinandergedrückt und/oder zusammengezogen werden, so dass sie Biegeschwingungen ausführen. Dabei werden die beiden Messrohre A und B gegenphasig zueinander angeregt und führen jeweils eine Schwenkbewegung um eine Längsachse des Coriolis-Durchflussmessgerätes 2 aus. Die beiden Messrohre A und B sind ferner eingangsseitig und ausgangsseitig durch entsprechende Koppelemente 10, 12 mechanisch aneinander gekoppelt.

Zwischen den beiden Messrohren A und B, jeweils an einem eingangsseitigen und an einem ausgangsseitigen Abschnitt derselben, erstrecken sich zwei Sensoren 14, 16, über deren Längenänderung mechanische Schwingungen der beiden Messrohre A und B erfassbar sind. In dem vorliegenden Ausführungsbeispiel ist durch die beiden Sensoren 14, 16 jeweils die Abstandsänderung zwischen den beiden Messrohren A, B, d.h. deren kombinierte Amplitude, erfassbar. Die Sensoren 14, 16 werden beispielsweise durch elektrodynamische Sensoren gebildet. Für eine Messung des Massedurchflusses kann über die beiden Sensoren 14, 16 unter anderem eine Phasenverschiebung der Schwingungen der Messrohre A, B entlang der Erstreckungsrichtung der beiden Messrohre A, B erfasst und daraus der Massedurchfluss berechnet werden.

Die Anregung des Erregers 8 durch Anlegen einer entsprechenden Anregungsspannung sowie die Auswertung der von den Sensoren 14, 16 bereitgestellten Messsignale erfolgt durch eine entsprechend ausgebildete Elektronik 18, die in den Figuren 1 und 2 lediglich schematisch durch eine Box dargestellt ist. Insbesondere ist die Elektronik 18 derart ausgebildet, dass durch diese eine Anregung des Schwingungssystems 20, das die beiden Messrohre A, B aufweist, derart steuerbar ist, dass das Schwingungssystem auf einer Resonanzfrequenz des Grundmodus der Biegeschwingung angeregt wird. Eine derartige Regelung der Anregungsfrequenz kann beispielsweise anhand einer Auswertung mindestens eines Messsignals der Sensoren 14, 16 erfolgen. Insbesondere kann solch eine Regelung derart erfolgen, dass die Phasenverschiebung zwischen der (periodischen) Anregung und einem (periodischen) Messsignal mindestens eines der Sensoren 14, 16 (d.h. der Phase der erzwungenen Schwingung) 90° beträgt. Ferner ist die Elektronik derart ausgebildet, dass durch diese die Anregung des Schwingungssystems 20 derart steuerbar ist, dass das Schwingungssystem 20 mit einer konstanten, kombinierten Amplitude schwingt. Dies bedeutet, dass die Anregung derart geregelt wird, dass der bei den ausgeführten Schwingungen erreichte, maximale Abstand zwischen den beiden Messrohren A, B (unabhängig von der Anregungsfrequenz) konstant ist. Wie oberhalb unter Bezugnahme auf die Transfer-Funktion erläutert wird, muss dementsprechend anhand mindestens eines Messsignals mindestens eines der Sensoren 14, 16, insbesondere anhand der Sensorspannung, die Anregungs-Eingangsgröße, wie beispielsweise die maximale, an den Erreger 8 angelegte Anregungsspannung, geregelt werden. Zusätzlich oder alternativ zu den oberhalb erläuterten Regelungen kann die Elektronik 18 auch derart ausgebildet sein, dass durch diese ein alternatives Schwingungsverhalten des Schwingungssystems 20 einstellbar ist. Beispielsweise können auch bei einer konstanten Anregungs-Eingangsgröße die Änderungen des Messsignals, insbesondere die Amplitude der Schwingung, analysiert werden.

Aufgrund des symmetrischen Aufbaus der beiden Messrohre A, B weisen diese, sofern sie jeweils gleich befüllt bzw. leer sind (und damit eine symmetrische Gewichtsverteilung vorliegt), jeweils die gleiche Resonanzfrequenz (des betreffenden Schwingungsmodus) auf. Werden sie in der oberhalb erläuterten Weise zu Schwingungen angeregt, so schwingen sie mit gleicher Amplitude gegenphasig zueinander. Das Schwingungssystem, das die beiden Messrohre aufweist, weist (in dem betreffenden Schwingungsmodus) dementsprechend nur eine Resonanzfrequenz auf. Bei einem Typ eines Coriolis-Durchflussmessgerätes, das zwei Messrohre in der oberhalb unter Bezugnahme auf die Figuren 1 und 2 erläuterten Konfiguration aufwies, wurde im Experiment bei einer vollständigen Befüllung der beiden Messrohre mit Wasser eine Resonanzfrequenz des Schwingungssystems, das die beiden Messrohre aufweist, von 651,56 Hz (Hertz) ermittelt. Bei einer vollständigen Befüllung der beiden Messrohre mit Luft wurde im Experiment eine Resonanzfrequenz von 871,73 Hz ermittelt.

Hieraus ist unter anderem ersichtlich, dass die Resonanzfrequenz jeweils mit der Dichte des jeweiligen Fluides in den Messrohren korreliert.

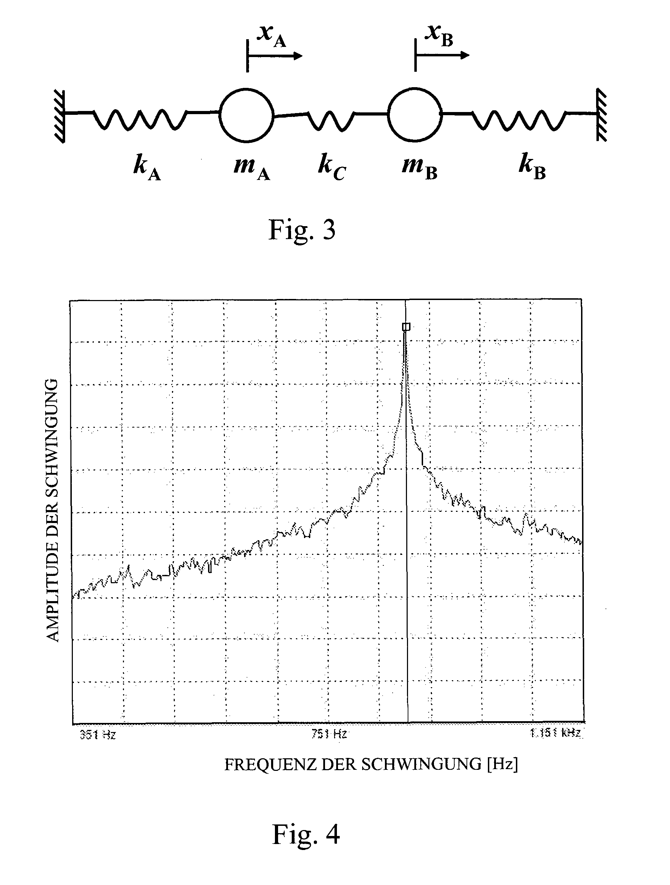

Das Schwingungssystem, das zwei Messrohre A und B aufweist, kann durch das in Fig. 3 dargestellte Modell veranschaulicht werden. Dabei werden mit $m_A$ und $m_B$ die Massen der Messrohre A bzw. B, mit $k_A$ und $k_B$ die Federkonstanten der Messrohre A bzw. B und mit $x_A$ und $x_B$ die Auslenkungen der Messrohre A bzw. B bezeichnet. Durch die Federkonstante $k_C$ wird die mechanische Kopplung zwischen den beiden Messrohren A und B beschrieben. Werden in dieses Modell die oberhalb angegebenen, experimentell für eine vollständige Befüllung mit Wasser bzw. mit Luft ermittelten Resonanzfrequenzen eingegeben, so kann durch Berechnung ermittelt werden, dass das Schwingungssystem bei einer Befüllung eines Messrohres mit Wasser und eines Messrohres mit Luft zwei Resonanzfrequenzen aufweist. Eine dieser, durch Berechnung ermittelten Resonanzfrequenzen, die vorliegend einen Wert von 639,75 Hz aufweist, liegt dabei näher an der Resonanzfrequenz, die für eine vollständige Befüllung mit Wasser gilt. Die andere der durch Berechnung ermittelten Resonanzfrequenzen, die vorliegend einen Wert von 857,72 Hz aufweist, liegt näher an der Resonanzfrequenz, die für eine vollständige Befüllung mit Luft gilt. Dieses Ergebnis konnte im Experiment bestätigt werden. Im Experiment ist zu berücksichtigen, dass bei einer Regelung der Anregungsfrequenz auf die (bzw. eine) Resonanzfrequenz des Schwingungssystems die Elektronik des Coriolis-Durchflussmessgerätes je nach angewendetem Regelalgorithmus und je nach Startwert der Anregungsfrequenz die Anregungsfrequenz auf eine der beiden Resonanzfrequenzen regelt.

Weiterhin ergibt sich aus den Berechnungen, dass bei einer Befüllung eines Messrohres mit Wasser und eines Messrohres mit Luft bei der Resonanzfrequenz von 857,72 Hz das Amplitudenverhältnis des einen Messrohres zu dem anderen Messrohr -0,0435 beträgt. Daraus ist ersichtlich, dass bei der Resonanzfrequenz (857,72 Hz), die weiter entfernt von der Resonanzfrequenz des Schwingungssystems bei einer reinen Befüllung mit Wasser (651,56 Hz) liegt, das mit Wasser befüllte Messrohr mit einer deutlich kleineren Amplitude schwingt als das mit Luft befüllte Messrohr. Durch das Minuszeichen des Amplitudenverhältnisses wird angegeben, dass die beiden Messrohre gegenphasig zueinander schwingen. Bei einer Befüllung eines Messrohres mit Wasser und eines Messrohres mit Luft bei der Resonanzfrequenz von 639,75 Hz beträgt das Amplitudenverhältnis des einen Messrohres zu dem anderen Messrohr +12,84. Daraus ist ersichtlich, dass bei der Resonanzfrequenz (639,75 Hz), die weiter entfernt von der Resonanzfrequenz des Schwingungssystems bei einer reinen Befüllung mit Luft (871,73 Hz) liegt, das mit Luft befüllte Messrohr mit einer deutlich kleineren Amplitude schwingt als das mit Wasser befüllte Messrohr.

Wie sich aus den Modellberechnungen ergibt und wie im Experiment bestätigt wurde, weist das Schwingungssystem, das die beiden Messrohre aufweist, bei einer Verstopfung eines Messrohres (sofern dadurch eine asymmetrische Gewichtsverteilung zwischen den beiden Messrohren auftritt) zwei Resonanzfrequenzen (in dem betreffenden Schwingungsmodus) auf. Weist das Schwingungssystem mehr als zwei Messrohre auf, so können in entsprechender Weise auch mehrere Resonanzfrequenzen des Schwingungssystems auftreten.

Wie oberhalb erläutert wird, kann das Auftreten von mehreren Resonanzfrequenzen dadurch festgestellt werden, dass in einem Frequenzspektrum eines analysierten Messsignales (z.B. eines der Sensoren 14, 16) mindestens zwei ausgeprägte Peaks bei jeweils unterschiedlichen Frequenzen auftreten. Dies wurde durch nachfolgendes Experiment bestätigt. Hierzu wurde im Unterschied zu der oberhalb erläuterten Regelung der Anregungsfrequenz auf die Resonanzfrequenz des Schwingungssystems das Schwingungssystem derart angeregt, dass die Anregungsfrequenzen ein sich gleichmäßig über den relevanten Frequenzbereich erstreckendes Frequenzband aufweisen. Der "relevante Frequenzbereich" umfasst dabei zumindest die Frequenzen, die als Peaks in dem Frequenzspektrum in Frage kommen, was von der jeweiligen Dichte der Fluide bzw. Befüllungen und dem jeweiligen Coriolis-Durchflussmessgerät abhängt. Eine solche Frequenzverteilung wird auch als "weißes Rauschen" (engl.: white noise) bezeichnet. Bei dem durchgeführten Experiment wies das Coriolis-Durchflussmessgerät wiederum zwei, symmetrisch zueinander angeordnete Messrohre auf.

Wie oberhalb unter Bezugnahme auf die Figuren 1 und 2 erläutert wurde, wurden die Schwingungen des Schwingungssystems, das die beiden Messrohre aufweist, über entsprechende Sensoren erfasst, wobei durch einzelne Sensoren jeweils die kombinierte Amplitude der Schwingungen der beiden Messrohre (d.h. deren Abstandsänderung) erfasst wurde. In dem Experiment wurde für verschiedene Befüllungen der Messrohre eines der Messsignale, das von einem Sensor bereitgestellt wurde und das die mechanischen Schwingungen der beiden Messrohre repräsentiert, in einem Spektrumanalysator ausgewertet. Die dabei erhaltenen Spektren sind in den Figuren 4 bis 7 dargestellt und werden im Folgenden erläutert. Dabei ist in den Figuren 4 bis 7 jeweils die Amplitude der Schwingung über der Frequenz der Schwingung (Einheit: Hz) aufgetragen.

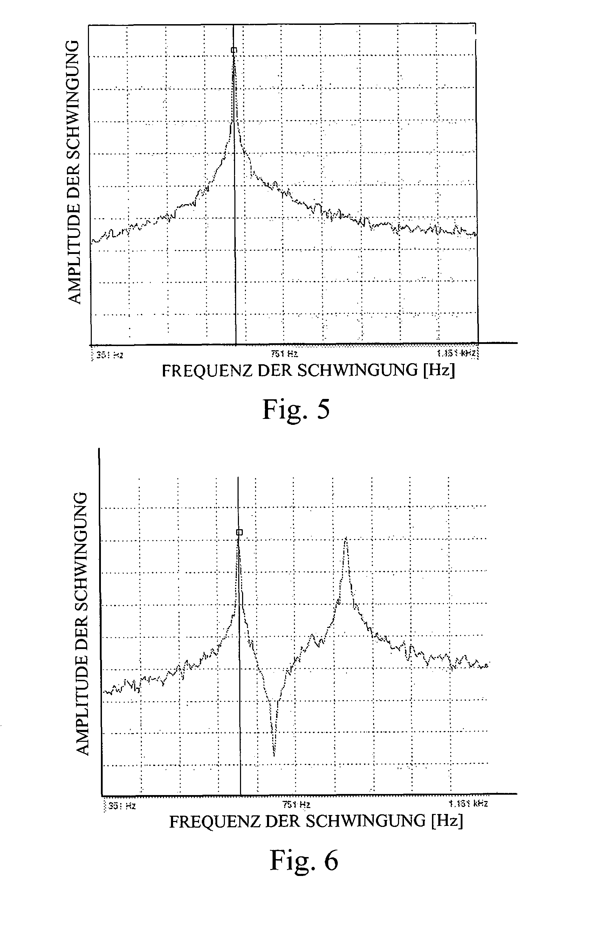

Fig. 4 zeigt das Frequenzspektrum einer Messung, bei der beide Messrohre mit Luft befüllt waren. Fig. 5 zeigt das Frequenzspektrum einer Messung, bei der beide Messrohre mit Wasser befüllt waren. Bei beiden Frequenzspektren ist ersichtlich, dass jeweils nur ein ausgeprägter Peak auftritt. Bei der Messung der Fig. 4 liegt dieser bei einer Frequenz von 871,73 Hz (Luft) und bei der Messung der Fig. 5 bei 651,56 Hz (Wasser).

Bei einer weiteren Messung wurden ein Messrohr mit Luft und ein Messrohr mit Wasser befüllt und das dabei erhaltene Messsignal durch den Spektrumanalysator ausgewertet. Dabei wurde das in Fig. 6 dargestellte Frequenzspektrum erhalten. Wie anhand der Fig. 6 ersichtlich ist, weist das Frequenzspektrum zwei ausgeprägte Peaks auf. Wie oberhalb anhand der Modellberechnung erläutert wird, liegt dabei einer der Peaks erwartungsgemäß relativ nahe an der Resonanzfrequenz, die für eine Befüllung beider Messrohre mit Wasser gilt, und der andere Peak liegt relativ nahe an der Resonanzfrequenz, die für eine Befüllung beider Messrohre mit Luft gilt.

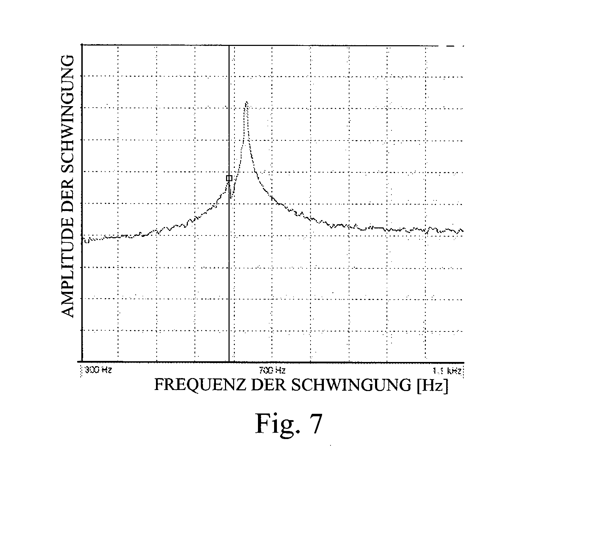

In einer weiteren Messung wurden ein Messrohr mit Wasser und ein Messrohr mit Ketchup befüllt und das dabei erhaltene Messsignal durch den Spektrumanalysator ausgewertet. Dabei wurde das in Fig. 7 dargestellte Frequenzspektrum erhalten. Wiederum weist das Frequenzspektrum zwei ausgeprägte Peaks auf, wobei die Frequenzdifferenz der Frequenzen, bei denen die Peaks auftreten, deutlich geringer als bei der in Fig. 6 dargestellten Messung ist. Dies lässt sich dadurch erklären, dass der Dichteunterschied zwischen Ketchup und Wasser nicht so hoch ist wie zwischen Luft und Wasser und sich somit die Resonanzfrequenzen der beiden Messrohre nicht so stark unterscheiden wie bei einer Befüllung mit Luft und mit Wasser.

Die Frequenzanalyse und die Feststellung, dass zwei oder mehrere Peaks in dem Frequenzspektrum auftreten, kann dabei auch durch eine entsprechend angepasste Elektronik des Coriolis-Durchflussmessgerätes durchgeführt werden. Dabei bestehen, wie oberhalb im allgemeinen Teil der Beschreibung erläutert wird, verschiedene, dem Fachmann geläufige Methoden, um ein Frequenzspektrum des analysierten Messsignals zu erhalten. Insbesondere kann an Stelle der oberhalb erläuterten Anregung über einen breiten Frequenzbereich auch die Anregungsfrequenz durchgefahren bzw. variiert und jeweils das Schwingungs-Ansprechverhalten des Schwingungssystems erfasst werden.

Wie oberhalb erläutert wird, kann eine Verstopfung eines Messrohres (sofern dadurch eine asymmetrische Gewichtsverteilung vorliegt) auch dadurch festgestellt werden, dass eine Änderung einer Transfer-Funktion des Coriolis-Durchflussmessgerätes gegenüber der Transfer-Funktion in einem nicht-verstopften Zustand auftritt. Wie oberhalb erläutert wird, stellt die Transfer-Funktion dabei eine Beziehung zwischen einer Anregungs-Eingangsgröße des Coriolis-Durchflussmessgerätes zu einem, die mechanischen Schwingungen (des Schwingungssystems) repräsentierenden Messsignal her. Beispielsweise werden durch die Transfer-Funktion die jeweiligen Verhältnisse zwischen der Anregungsspannung und einem Anregungsstrom, zwischen dem Anregungsstrom und einer Anregungskraft, zwischen der Anregungskraft und einer Amplitude der Auslenkung des Sensors, zwischen der Amplitude der Auslenkung des Sensors und einer Geschwindigkeit der Auslenkungsänderung des Sensors (bzw. der Schwingung), zwischen der Geschwindigkeit der Auslenkungsänderung des Sensors und einer Sensorspannung, sowie zwischen der Sensorspannung und nach einer geräteinternen Verarbeitung tatsächlich von einer Sensorelektronik ausgegebenen Spannung beschrieben, wobei diese Größen in dem Coriolis-Durchflussmessgerät von der Anregung bis zum Erhalt des Messsignals in der angegebenen Reihenfolge verarbeitet werden. Die Transfer-Funktion kann sich je nach Gerät unterscheiden, insbesondere können die einzelnen Faktoren, welche die oberhalb angegebenen Verhältnisse beschreiben, voneinander abweichen.

Wie oberhalb beschrieben wird, gehen in die Transfer-Funktion unter anderem die Nachgiebigkeit (bzw. alternativ die Steifigkeit) des Schwingungssystems sowie die Resonanzfrequenz des Schwingungssystems mit ein. Diese beiden Größen gehen insbesondere in den Faktor ein, welcher die Umwandlung der durch den mindestens einen Erreger ausgeübten Anregungskraft und der Amplitude der Auslenkung des Sensors beschreibt.

Wie dem Fachmann bekannt ist, kann unter Heranziehung der Differentialgleichung, die das Schwingungssystem beschreibt, und unter Heranziehung der Transfer-Funktion, die für das Coriolis-Durchflussmessgerät in nicht-verstopftem Zustand gilt, die Nachgiebigkeit $k_1$ für den Fall, dass sich das System in Resonanz befindet, anhand der nachfolgenden Gleichung (1) ermittelt werden:

$$(1) \qquad k_1 = \frac{1}{e_D Q D}$$

In Gleichung (1) wird mit $e_D$ die Erreger-Effizienz bezeichnet. Die Erreger-Effizienz $e_D$ bildet dabei einen Teil der Transfer-Funktion und gibt das Verhältnis zwischen der Anregungskraft $F_D$ und dem Anregungsstrom $I_D$ an. Die Erreger-Effizienz $e_D$ ist dementsprechend eine gerätespezifische Größe, die je nach Art des Erregers unterschiedliche Werte aufweisen kann. Der Anregungsstrom $I_D$ und die Anregungskraft $F_D$ des mindestens einen Erregers wurden oberhalb bereits in Bezug auf die Transfer-Funktion erläutert. Dieses Verhältnis ist in der nachfolgenden Gleichung (2) angegeben:

$$(2) \qquad e_D = \frac{F_D}{I_D}$$

In Gleichung (1) wird mit D die Dämpfung bezeichnet. Die Dämpfung D wird dabei durch das Verhältnis des Anregungsstroms $I_D$ zu der Amplitude der Auslenkung des Sensors $X_S$ gebildet. Auch die Amplitude der Auslenkung des Sensors $X_S$ wurde bereits oberhalb in Bezug auf die Transfer-Funktion erläutert. Das Verhältnis zur Berechnung der Dämpfung D ist in der nachfolgenden Gleichung(3)angegeben:

$$(3) \qquad D = \frac{I_D}{X_S}$$

Mit Q wird in Gleichung (1) der Qualitätsfaktor bezeichnet. Dieser beschreibt das Abklingverhalten der Schwingung des Schwingungssystems nach einer Anregung desselben. Im Experiment kann der Qualitätsfaktor Q anhand der nachfolgenden Gleichung (4) berechnet werden, wobei hierzu das Schwingungssystem zunächst (mit der Resonanzfrequenz) angeregt wird und dann die Anregung unterbrochen sowie das Abklingverhalten der Schwingung aufgenommen wird.

$$(4) \qquad Q = \frac{\omega_0 (t_2 - t_1)}{2 \ln(\frac{Y_1}{Y_2})}$$

Nach Unterbrechung der Anregung schwingt das Schwingungssystem periodisch weiter, wobei die Amplitude der Schwingung über der Zeit abfällt. Wie in dem Fachgebiet bekannt ist, beschreibt dabei die Hüllkurve der periodischen Schwingung das Abklingverhalten der Amplitude der Schwingung. Zur Ermittlung des Qualitätsfaktors Q wird beispielsweise die Hüllkurve, durch die das Abklingverhalten der Amplitude der Schwingung beschrieben wird, durch eine entsprechende Messung erfasst. $t_1$ und $t_2$ bilden dabei zwei aufeinanderfolgende Zeitpunkte und $Y_1$ und $Y_2$ bilden dabei die jeweils zu diesen Zeitpunkten zugehörigen Amplituden der Schwingung (die beispielsweise aus der Hüllkurve erhalten werden). Mit $\omega_0$ wird die Resonanzfrequenz des Schwingungssystems bezeichnet.

Dementsprechend kann die Nachgiebigkeit $k_1$

anhand der Gleichungen (1) - (4) aus dem Schwingungsverhalten des Schwingungssystems, das die mindestens zwei Messrohre aufweist, ermittelt werden.

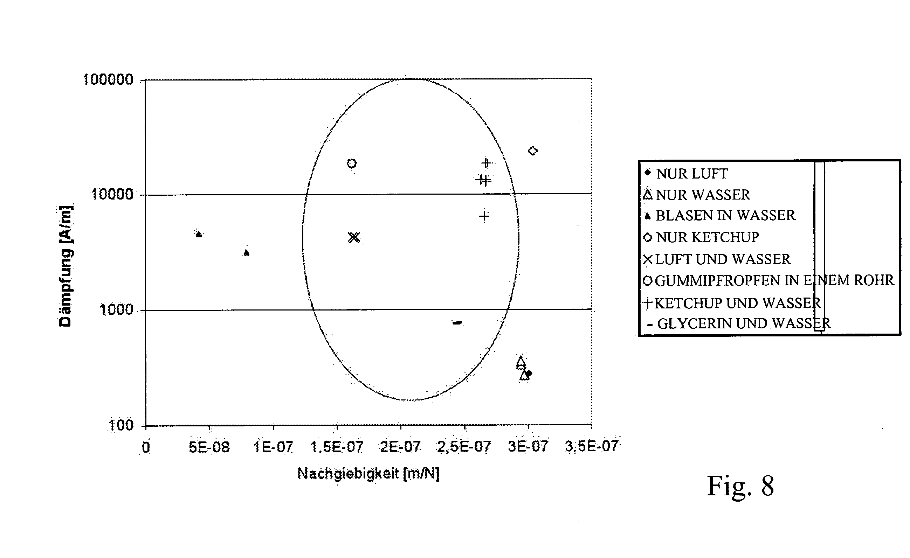

Mit einem Coriolis-Durchflussmessgerät, das zwei Messrohre und im Wesentlichen die oberhalb, unter Bezugnahme auf die Figuren 1 und 2 erläuterte Konfiguration aufwies, wurden verschiedene Messungen, bei denen die beiden Messrohre mit unterschiedlichen Fluiden bzw. Stoffen befüllt waren, durchgeführt und daraus jeweils die Nachgiebigkeit $k_1$ und die Dämpfung D in der oberhalb beschriebenen Weise bestimmt. Die dabei erzielten Ergebnisse sind in Fig. 8 dargestellt, wobei jeweils die Dämpfung D (Einheit: A/m: Ampere/Meter) über der Nachgiebigkeit $k_1$ (Einheit: m/N: Meter/Newton) aufgetragen ist.

In Fig. 8 zeigt der Messpunkt in Form einer ausgefüllten Raute eine Messung, bei der beide Messrohre mit Luft befüllt waren. Die direkt daneben angeordneten drei Messpunkte in Form von (nicht ausgefüllten) Dreiecken zeigen jeweils Messungen, bei denen die beiden Messrohre mit Wasser befüllt waren. Der Messpunkt in Form einer (nicht ausgefüllten) Raute zeigt eine Messung, bei der beide Messrohre mit Ketchup befüllt waren. Wie anhand dieser Messpunkte ersichtlich ist, ist die aus den verschiedenen Messungen ermittelte Nachgiebigkeit $k_1$, trotz unterschiedlicher Dichte und Viskosität der jeweiligen Fluide, weitgehend identisch. Dieses Ergebnis ist erwartungsgemäß, da die Nachgiebigkeit $k_1$ eine gerätespezifische Größe ist, die unabhängig von der Befüllung der Messrohre ist.

Sämtliche Messpunkte innerhalb der Ellipse zeigen jeweils Messungen, bei denen die beiden Messrohre jeweils unterschiedlich befüllt waren und damit eine asymmetrische Gewichtsverteilung zwischen den beiden Messrohren vorlag. Insbesondere zeigen die zwei Messpunkte in Form von Kreuzen Messungen, bei denen ein Messrohr mit Wasser und ein Messrohr mit Luft befüllt war. Der Messpunkt in Form eines Ringes zeigt eine Messung, bei der sich in einem Messrohr ein Gummipfropfen befand, während das andere Messrohr leer war. Die sieben Messpunkte in Form von PlusZeichen zeigen jeweils Messungen, bei denen ein Messrohr mit Wasser und ein Messrohr mit Ketchup befüllt war. Die beiden Messpunkte in Form von Minus-Zeichen zeigen jeweils Messungen, bei denen ein Messrohr mit Glycerin und ein Messrohr mit Wasser befüllt war.

Wie anhand sämtlicher Messpunkte innerhalb der Ellipse ersichtlich ist, weisen diese gegenüber einer symmetrischen Befüllung der Messrohre eine reduzierte Nachgiebigkeit und in der Regel auch eine höhere Dämpfung auf. Teilweise tritt eine Reduzierung der Nachgiebigkeit bis auf die Hälfte des ursprünglichen Wertes auf. Die Reduzierung der Nachgiebigkeit ist umso stärker, je höher der Dichteunterschied zwischen den beiden Fluiden bzw. Stoffen, d.h. je größer der Unterschied in der Gewichtsverteilung zwischen den beiden Messrohren, ist. Dementsprechend wird durch dieses Experiment bestätigt, dass das Auftreten einer Verstopfung (sofern dadurch eine asymmetrische Gewichtsverteilung zwischen den Messrohren auftritt) dadurch feststellbar ist, dass bei Anregen der mindestens zwei Messrohre auf einer Resonanzfrequenz des Schwingungssystems eine Reduzierung der bestimmten Nachgiebigkeit $k_1$ des Schwingungssystems auftritt.

In Fig. 8 zeigen die zwei Messpunkte in Form von ausgefüllten Dreiecken eine Messung, bei denen beide Messrohre mit Wasser durchströmt wurden, wobei in dem Wasser Blasen mitgeführt wurden. Anhand dieser Messungen ist ersichtlich, dass die Mitführung von Gaseinschlüssen ebenfalls zu einer Reduzierung der bestimmten Nachgiebigkeit $k_1$ führen kann. Wie oberhalb erläutert wird, sind in solch einem Fall auch die Frequenzfluktuationen der Anregungsfrequenz, die auf die Resonanzfrequenz des Schwingungssystems geregelt wird, erhöht. Durch Bestimmung dieser Frequenzfluktuationen kann dieser Fall dementsprechend ausgeschlossen werden.

Die vorliegende Erfindung ist nicht auf die unter Bezugnahme auf die Figuren erläuterten Ausführungsbeispiele beschränkt. Wie oberhalb erläutert wird, sind insbesondere verschiedene Messrohrkonfigurationen (insbesondere unterschiedliche Formen der Messrohre und auch mehr als nur zwei Messrohre) möglich. Auch die Anregung der Messrohre zu Schwingungen und die Erfassung der Schwingungen der Messrohre können auf verschiedene Arten erfolgen. Beispielsweise können die Messrohre auch einzeln angeregt und deren Amplituden einzeln über entsprechende Sensoren erfasst werden. Auch Art und Anzahl der verwendeten Sensoren und Erreger können von den beschriebenen Sensoren und dem beschriebenen Erreger abweichen. Weist das Coriolis-Durchflussmessgerät mehr als zwei Messrohre auf, so kann in entsprechender Weise auch die Verstopfung von zwei (oder noch mehreren) Messrohren festgestellt werden. Auf diese Konstellation wurde aus Gründen der Klarheit der Formulierung nicht jedesmal explizit hingewiesen.

**Patentansprüche**

1. Verfahren zum Detektieren einer Verstopfung eines Messrohres (A; B) eines Coriolis-Durchflussmessgerätes (2),
   wobei das Coriolis-Durchflussmessgerät (2) in eine Rohrleitung einsetzbar ist und derart ausgebildet ist, dass durch dieses eine physikalische Messgröße, insbesondere ein Massedurchfluss, eine Viskosität und/oder eine Dichte, eines, in der Rohrleitung strömenden Fluides bestimmbar ist,
   wobei das Coriolis-Durchflussmessgerät (2) mindestens zwei Messrohre (A, B) aufweist, auf die ein, in der Rohrleitung strömendes Fluid aufteilbar ist, und
   wobei das Verfahren nachfolgende Schritte aufweist:

A) Anregen der mindestens zwei Messrohre (A, B) zu mechanischen Schwingungen durch mindestens einen Erreger (8);

B) Erfassen von mechanischen Schwingungen der Messrohre (A, B) und Erzeugen mindestens eines, die mechanischen Schwingungen repräsentierenden Messsignals durch mindestens einen Sensor (14, 16);

C) Analysieren mindestens eines erzeugten Messsignals auf das Auftreten einer Abweichung einer Resonanzfrequenz eines Messrohres (A; B) gegenüber einer Resonanzfrequenz des mindestens einen anderen Messrohres (B; A); und

D) Feststellen einer Verstopfung eines Messrohres (A; B) bei Auftreten einer solchen Abweichung.

2. Verfahren gemäß Anspruch 1, **dadurch gekennzeichnet, dass** die mindestens zwei Messrohre (A, B) mechanisch aneinander gekoppelt sind und ein Schwingungssystem (20) bilden.

3. Verfahren gemäß Anspruch 1 oder 2, **dadurch gekennzeichnet,**
dass bei dem Schritt des Anregens die mindestens zwei Messrohre (A, B) gemeinsam angeregt werden, insbesondere dass zwei Messrohre (A, B) in jeweils entgegengesetzter Richtung durch Änderung von deren relativem Abstand angeregt werden, und/oder dass bei dem Schritt des Erfassens eine relative Abstandsänderung zwischen Messrohren (A, B), insbesondere zwischen zwei Messrohren (A, B), erfasst wird.

4. Verfahren gemäß einem der vorangehenden Ansprüche, **dadurch gekennzeichnet, dass** bei dem Schritt des Anregens eine Anregungsfrequenz der mindestens zwei Messrohre (A, B) auf eine Resonanzfrequenz eines Schwingungssystems (20), das die mindestens zwei Messrohre (A, B) aufweist, geregelt wird.

5. Verfahren gemäß einem der vorangehenden Ansprüche, **dadurch gekennzeichnet, dass** bei dem Schritt des Analysierens das Auftreten einer Abweichung der Resonanzfrequenzen dadurch festgestellt wird, dass in einem Frequenzspektrum eines analysierten Messsignals mindestens zwei ausgeprägte Peaks bei jeweils unterschiedlichen Frequenzen auftreten, wobei das analysierte Messsignal mechanische Schwingungen eines Schwingungssystems (20), das die mindestens zwei Messrohre (A, B) aufweist, repräsentiert.

6. Verfahren gemäß Anspruch 5, **dadurch gekennzeichnet, dass** bei dem Schritt des Analysierens das Auftreten einer Abweichung der Resonanzfrequenzen nur dann festgestellt wird, wenn die Frequenzdifferenz der Frequenzen, bei denen die Peaks auftreten, einen vorbestimmten Grenzwert überschreitet.

7. Verfahren gemäß Anspruch 5 oder 6, **dadurch gekennzeichnet, dass** das Frequenzspektrum durch Variieren der Anregungsfrequenz des mindestens einen Erregers (8) und durch Erfassen des zugehörigen Schwingungs-Ansprechverhaltens des Schwingungssystems (20) durch mindestens einen Sensor (14, 16) bereitgestellt wird.

8. Verfahren gemäß Anspruch 5 oder 6, **dadurch gekennzeichnet, dass** bei einer Anregung, die ein sich über den relevanten Frequenzbereich erstreckendes Frequenzband als Anregungsfrequenzen aufweist, das Frequenzspektrum durch Fourier-Analyse des dabei erfassten, analysierten Messsignals bereitgestellt wird.

9. Verfahren gemäß einem der Ansprüche 1 bis 4, **dadurch gekennzeichnet, dass** bei dem Schritt des Analysierens eine Abweichung der Resonanzfrequenzen dadurch festgestellt wird, dass bei Anregen der mindestens zwei Messrohre (A, B) auf einer Resonanzfrequenz des Schwingungssystems (20), das die mindestens zwei Messrohre (A, B) aufweist, eine Änderung einer Transfer-Funktion des Coriolis-Durchflussmessgerätes (2) gegenüber der Transfer-Funktion in einem nicht-verstopften Zustand auftritt, wobei die Transfer-Funktion eine Anregungs-Eingangsgröße, insbesondere eine, an den mindestens einen Erreger (8) angelegte Anregungsspannung, zu einem, die mechanischen Schwingungen repräsentierenden Messsignal, insbesondere zu einer von dem mindestens einen Sensor (14, 16) bereitgestellten Sensorspannung, in Beziehung setzt.

10. Verfahren gemäß einem der Ansprüche 1 bis 4 oder 9, **dadurch gekennzeichnet, dass** bei dem Schritt des Analysierens eine Abweichung der Resonanzfrequenzen dadurch festgestellt wird, dass bei Anregen der mindestens zwei Messrohre (A, B) auf einer Resonanzfrequenz des Schwingungssystems (20), das die mindestens zwei Messrohre (A, B) aufweist,
eine Reduzierung einer, aus den erfassten, mechanischen Schwingungen der Messrohre (A, B) bestimmten Nachgiebigkeit des Schwingungssystems (20) auftritt,
wobei die Nachgiebigkeit unter Heranziehung einer, für einen nicht-verstopften Zustand unter Resonanzbedingungen geltenden Transfer-Funktion des Coriolis-Durchflussmessgerätes (2) bestimmt wird und wobei die Transfer-Funktion eine Anregungs-Eingangsgröße, insbesondere eine, an den mindestens einen Erreger (8) angelegte Anregungsspannung, zu einem, die mechanischen Schwingungen repräsentierenden Messsignal, insbesondere zu einer von dem mindestens einen Sensor (14, 16) bereitgestellten Sensorspannung, in Beziehung setzt.

11. Verfahren gemäß einem der Ansprüche 1 bis 4, 9 oder 10, **dadurch gekennzeichnet, dass** bei dem Schritt des Analysierens eine Abweichung der Resonanzfrequenzen dadurch festgestellt wird, dass bei Anregen der mindestens zwei Messrohre (A, B) auf einer Resonanzfrequenz des Schwingungssystems (20), das die mindestens zwei Messrohre (A, B) aufweist, eine Erhöhung einer, aus den erfassten, mechanischen Schwingungen der Messrohre (A, B) bestimmten Steifigkeit des Schwingungssystems (20) auftritt, wobei die Steifigkeit unter Heranziehung einer, für einen nicht-verstopften Zustand unter Resonanzbedingungen geltenden Transfer-Funktion des Coriolis-Durchflussmessgerätes (2) bestimmt wird und wobei die Transfer-Funktion eine Anregungs-Eingangsgröße, insbesondere eine, an den mindestens einen Erreger (8) angelegte Anregungsspannung, zu einem, die mechanischen Schwingungen repräsentierenden Messsignal, insbesondere einer von dem mindestens einen Sensor (14, 16) bereitgestellten Sensorspannung, in Beziehung setzt.

12. Verfahren gemäß Anspruch 10 oder 11, **dadurch gekennzeichnet, dass** bei dem Schritt des Analysierens eine Abweichung der Resonanzfrequenzen erst dann festgestellt wird, wenn die Differenz der bestimmten, reduzierten Nachgiebigkeit von der bestimmten Nachgiebigkeit in nicht-verstopftem Zustand und/oder wenn die Differenz der bestimmten Steifigkeit in nicht-verstopftem Zustand von der bestimmten, erhöhten Steifigkeit, einen vorbestimmten Grenzwert überschreitet.

13. Verfahren gemäß einem der Ansprüche 9 bis 12, **dadurch gekennzeichnet, dass** bei dem Schritt des Analysierens eine Abweichung der Resonanzfrequenzen nicht festgestellt wird, wenn Frequenzfluktuationen der Anregungsfrequenz, die auf eine Resonanzfrequenz des Schwingungssystems (20) geregelt wird, erhöht sind, insbesondere wenn diese Frequenzfluktuationen einen vorbestimmten Grenzwert überschreiten.

14. Verfahren gemäß einem der Ansprüche 10 bis 13, **dadurch gekennzeichnet, dass** bei dem Schritt des Analysierens eine Abweichung der Resonanzfrequenzen nicht festgestellt wird, wenn eine Reduzierung der Nachgiebigkeit und/oder eine Erhöhung der Steifigkeit schleichend, insbesondere unterhalb eines vorbestimmten Grenzwertes innerhalb eines vorbestimmten Zeitraumes, auftritt.

15. Coriolis-Durchflussmessgerät, das in eine Rohrleitung einsetzbar ist und derart ausgebildet ist, dass durch dieses eine physikalische Messgröße, insbesondere ein Massedurchfluss, eine Viskosität und/oder eine Dichte eines, in der Rohrleitung strömenden Fluides bestimmbar ist, wobei das Coriolis-Durchflussmessgerät

mindestens zwei Messrohre (A, B), auf die ein, in der Rohrleitung strömendes Fluid aufteilbar ist,

mindestens einen Erreger (8), durch den die mindestens zwei Messrohre (A, B) zu mechanischen Schwingungen anregbar sind, und

mindestens einen Sensor (14, 16), durch den mechanische Schwingungen der Messrohre (A, B) erfassbar und mindestens eines, die mechanischen Schwingungen repräsentierendes Messsignal erzeugbar ist, aufweist,

wobei eine Elektronik (18) des Coriolis-Durchflussmessgerätes, durch die das mindestens eine, erzeugte Messsignal verarbeitet wird, derart ausgebildet ist, dass sie mindestens ein erzeugtes Messsignal auf das Auftreten einer Abweichung einer Resonanzfrequenz eines Messrohres (A; B) gegenüber einer Resonanzfrequenz des mindestens einen anderen Messrohres (B; A) hin analysiert und bei Auftreten einer solchen Abweichung eine Verstopfung eines Messrohres (A; B) feststellt.

## Claims

1. Procedure to detect a blockage in a measuring tube (A, B) in a Coriolis flowmeter (2), wherein the Coriolis flowmeter (2) can be inserted into a pipe and is designed in such a way that said flowmeter can determine a physical measured variable, particularly a mass flow, a viscosity and/or a density of a fluid flowing through the pipe, wherein the Coriolis flowmeter (2) comprises at least two measuring tubes (A, B) to which a fluid flowing through the pipe can be apportioned, and wherein said procedure comprises the following steps:

A) Excitation of the at least two measuring tubes (A, B) to mechanical vibrations by at least one exciter (8);
B) Detection of the mechanical vibrations of the measuring tubes (A, B) and generation of at least one measuring signal that represents the mechanical vibrations by at least one sensor (14, 16);
C) Analysis of at least one generated measuring signal to determine a deviation between the resonance frequency of one measuring tube (A; B) in relation to a resonance frequency of the at least one other measuring tube (B, A); and

D) Determination of a blockage in a measuring tube (A, B) should such a deviation occur.

2. Procedure as claimed in Claim 1, **characterized in that** the at least two measuring tubes (A, B) are mechanically coupled to one another and form a vibration system (20).

3. Procedure as claimed in Claim 1 or 2, **characterized in that**
in the course of the excitation step, the at least two measuring tubes (A, B) are excited together, particularly **in that** two measuring tubes (A, B) are excited in the opposite direction in each case by changing their relative distance, and/or
**in that** in the course of the detection step, a relative change in the distance between measuring tubes (A, B) is detected, particularly between two measuring tubes (A, B).

4. Procedure as claimed in one of the previous claims, **characterized in that** in the course of the excitation step an excitation frequency of the at least two measuring tubes (A, B) is regulated to a resonance frequency of a vibration system (20) which has the at least two measuring tubes (A, B).

5. Procedure as claimed in one of the previous claims, **characterized in that** in the course of the analysis step, the occurrence of a deviation in the resonance frequencies is determined **in that** at least two pronounced peaks occur at different frequencies in each case in a frequency spectrum of an analyzed measuring signal, wherein the analyzed measuring signal represents mechanical vibrations of a vibration system (20) that has the at least two measuring tubes (A, B).

6. Procedure as claimed in Claim 5, **characterized in that** in the course of the analysis step the occurrence of a deviation in the resonance frequencies is only determined if the frequency difference of the frequencies at which the peaks occur exceeds a predefined limit value.

7. Procedure as claimed in Claim 5 or 6, **characterized in that** the frequency spectrum is provided by varying the excitation frequency of the at least one exciter (8) and by measuring the associated vibration response behavior of the vibration system (20) using at least one sensor (14, 16).

8. Procedure as claimed in Claim 5 or 6, **characterized in that** in the case of an excitation which has, as the excitation frequencies, a frequency band extending over the relevant frequency range, the frequency spectrum is provided through Fourier analysis of the measuring signal that is detected and analyzed.

9. Procedure as claimed in one of the Claims 1 to 4, **characterized in that** during the analysis step, a deviation in the resonance frequencies is determined **in that** a change occurs in a transfer function of the Coriolis flowmeter (2) in relation to the transfer function in an unblocked state when the at least two measuring tubes (A, B) are excited to a resonance frequency of the vibration system (20) that has the at least two measuring tubes (A, B),
wherein the transfer function puts an excitation input variable - particularly an excitation voltage applied to the at least one exciter (8) - in relation to a measuring signal that represents the mechanical vibrations, particularly to a sensor voltage provided by the at least one sensor (14, 16).

10. Procedure as claimed in one of the Claims 1 to 4 or 9, **characterized in that** during the analysis step, a deviation in the resonance frequencies is determined **in that** a reduction in a flexibility of the vibration system (20), which is determined from the detected mechanical vibrations of the measuring tubes (A, B), occurs when the at least two measuring tubes (A, B) are excited to a resonance frequency of the vibration system (20) that has the at least two measuring tubes (A, B),
wherein the flexibility is determined using a transfer function of the Coriolis flowmeter (2) that applies for an unblocked state under resonance conditions, and wherein the transfer function puts an excitation input variable - particularly an excitation voltage applied to the at least one exciter (8) - in relation to a measuring signal that represents the mechanical vibrations, particularly in relation to a sensor voltage provided by the at least one sensor (14, 16).

11. Procedure as claimed in one of the Claims 1 to 4, 9 or 10, **characterized in that** during the analysis step, a deviation in the resonance frequencies is determined **in that** an increase in a rigidity of the vibration system (20), which is determined from the detected mechanical vibrations of the measuring tubes (A, B), occurs when the at least two measuring tubes (A, B) are excited to a resonance frequency of the vibration system (20) that has the at least two measuring tubes (A, B),
wherein the rigidity is determined using a transfer function of the Coriolis flowmeter (2) that applies for an unblocked state under resonance conditions, and wherein the transfer function puts an excitation input variable - particularly an excitation voltage applied to the at least one exciter (8) - in relation to a measuring signal that represents the mechanical vibrations, particularly in relation to a sensor voltage provided by the at least one sensor (14, 16).

**12.** Procedure as claimed in Claim 10 or 11, **characterized in that** during the analysis step a deviation in the resonance frequencies is only determined if the difference between the determined, reduced flexibility and the defined flexibility in the unblocked state exceeds a predefined limit value and/or

if the difference between the defined rigidity in the unblocked state and the determined higher level of rigidity exceeds a predefined limit value.

**13.** Procedure as claimed in one of the Claims 9 to 12, **characterized in that** during the analysis step a deviation in the resonance frequencies is not determined if frequency fluctuations in the excitation frequency, which is regulated to a resonance frequency of the vibration system (20), increase, particularly if these frequency fluctuations exceed a predefined limit value.

**14.** Procedure as claimed in one of the Claims 10 to 13, **characterized in that** during the analysis step a deviation in the resonance frequencies is not determined if a slow reduction in the flexibility and/or a slow increase in the rigidity occurs, particularly one that is below a predetermined limit value within a predefined time frame.

**15.** Coriolis flowmeter which can be inserted into a pipe and is designed in such a way that said flowmeter can determine a physical measured variable, particularly a mass flow, a viscosity and/or a density of a fluid flowing through the pipe,

said Coriolis flowmeter comprising

at least two measuring tubes (A, B) to which a fluid flowing through the pipe can be apportioned,

at least one exciter (8) via which the at least two measuring tubes (A, B) can be excited to mechanical vibrations, and

at least one sensor (14, 16) which allows the detection of mechanical vibrations of the measuring tubes (A, B) and the generation of at least one measuring signal which represents the mechanical vibrations, wherein an electronics system (18) of the Coriolis flowmeter, via which the at least one measuring signal which is generated is processed, is designed in such a way that it analyzes at least one generated measuring signal for the occurrence of a deviation in the resonance frequency of a measuring tube (A; B) in relation to a resonance frequency of the at least one other measuring tube (B, A) and, if such a deviation occurs, determines a blockage in a measuring tube (A, B).

**Revendications**

**1.** Procédé destiné à la détection d'un colmatage d'un tube de mesure (A, B) d'un débitmètre Coriolis (2),

pour lequel le débitmètre Coriolis (2) est insérable dans une conduite et est conçu de telle sorte à pouvoir déterminer à travers celui-ci une grandeur mesurée physique, notamment un débit massique, une viscosité et/ou une densité d'un fluide circulant dans la conduite,

pour lequel le débitmètre Coriolis (2) comprend au moins deux tubes de mesure (A, B), sur lesquels un fluide circulant dans la conduite peut être réparti, et le procédé comportant les étapes suivantes :

A) Excitation des au moins deux tubes de mesure (A, B) en vibrations mécaniques au moyen d'au moins un excitateur (8) ;
B) Détection des vibrations mécaniques des tubes de mesure (A, B) et génération d'au moins un signal de mesure représentant les vibrations mécaniques au moyen d'au moins un capteur (14, 16) ;
C) Analyse d'au moins un signal de mesure généré en vue de l'apparition d'un écart d'une fréquence de résonance d'un tube de mesure (A, B) par rapport à une fréquence de résonance de l'au moins autre tube de mesure (B, A) ; et
D) Détermination d'un colmatage d'un tube de mesure (A, B) en cas d'apparition d'un tel écart.

**2.** Procédé selon la revendication 1, **caractérisé en ce que** les au moins deux tubes de mesure (A, B) sont couplés mécaniquement entre eux et forment ainsi un système vibrant (20).

**3.** Procédé selon la revendication 1 ou 2, **caractérisé en ce qu'**au cours de l'étape d'excitation, les au moins deux tubes de mesure (A, B) sont excités ensemble, notamment en ce que les deux tubes de mesure (A, B) sont excités à chaque fois en direction opposée par la modification de leur distance relative, et/ou en ce qu'au cours de l'étape de détection, une modification de la distance relative entre les tubes de mesure (A, B) est détectée entre les deux tubes de mesure (A, B).

**4.** Procédé selon l'une des revendications précédentes, **caractérisé en ce qu'**au cours de l'étape d'excitation, une fréquence d'excitation des au moins deux tubes de mesure (A, B) est réglée à une fréquence de résonance d'un système vibrant (20), lequel comprend les au moins deux tubes de mesure (A, B).

**5.** Procédé selon l'une des revendications précédentes, **caractérisé en ce qu'**au cours de l'étape d'analyse est déterminée l'apparition d'un écart des fréquences de résonance, **en ce qu'**apparaissent aux moins deux points culminants marqués pour des fréquences respectives différentes dans un spectre de fréquences d'un signal de mesure analysé, le signal de mesure analysé représentant les vibrations mécaniques d'un système vibrant (20), lequel comprend les au moins deux tubes de mesure (A, B).

6. Procédé selon la revendication 5, **caractérisé en ce qu'**au cours de l'étape d'analyse est déterminée l'apparition d'un écart des fréquences de résonance uniquement lorsque la différence des fréquences, auxquelles apparaissent les points culminants, dépasse un seuil prédéfini.

7. Procédé selon la revendication 5 ou 6, **caractérisé en ce que** le spectre de fréquences est mis à disposition par la variation d'une fréquence d'excitation de l'au moins un excitateur (8) et par la détection du mode de réponse correspondant des vibrations du système vibrant (20) au moyen d'au moins un capteur (14, 16).

8. Procédé selon la revendication 5 ou 6, **caractérisé en ce qu'**en cas d'excitation, qui présente en tant que fréquences d'excitation une bande de fréquences s'étendant sur la gamme de fréquences concernée, le spectre de fréquences est mis à disposition au moyen d'une analyse de Fourier du signal de mesure détecté et analysé.

9. Procédé selon l'une des revendications 1 à 4, **caractérisé en ce qu'**au cours de l'étape d'analyse est déterminé un écart des fréquences de résonance par le fait qu'apparaît, en cas d'excitation des au moins deux tubes de mesure (A, B) à une fréquence de résonance du système vibrant (20), lequel comprend les au moins deux tubes de mesure (A, B), une modification d'une fonction de transfert du débitmètre Coriolis (2) par rapport à la fonction de transfert dans un état "non colmaté",
pour lequel la fonction de transfert met en relation une grandeur d'entrée d'excitation, notamment une tension d'excitation appliquée à l'au moins un excitateur (8), avec un signal de mesure représentant les vibrations mécaniques, notamment avec une tension de capteur mise à disposition par l'au moins un capteur (14, 16).

10. Procédé selon l'une des revendications 1 à 4 ou 9, **caractérisé en ce qu'**au cours de l'étape d'analyse est déterminé un écart des fréquences de résonance par le fait qu'apparaît, en cas d'excitation des au moins deux tubes de mesure (A, B) à une fréquence de résonance du système vibrant (20), lequel comprend les deux tubes de mesure (A, B), une réduction d'une élasticité du système vibrant (20) déterminée à partir des vibrations mécaniques détectées des tubes de mesure (A, B),
l'élasticité étant déterminée à l'aide d'une fonction de transfert du débitmètre Coriolis (2) valable dans des conditions de résonance pour un état "non colmaté", et
la fonction de transfert mettant en relation une grandeur d'entrée d'excitation, notamment une tension d'excitation appliquée à l'au moins un excitateur (8), avec un signal de mesure représentant les vibrations mécaniques, notamment avec une tension de capteur mise à disposition par l'au moins un capteur (14, 16).

11. Procédé selon l'une des revendications 1 à 4, 9 ou 10, **caractérisé en ce qu'**au cours de l'étape d'analyse est déterminé un écart des fréquences de résonance par le fait qu'apparaît, en cas d'excitation des au moins deux tubes de mesure (A, B) à une fréquence de résonance du système vibrant (20), lequel comprend les au moins deux tubes de mesure (A, B), une augmentation d'une rigidité du système vibrant (20) déterminée à partir des vibrations mécaniques détectées des tubes de mesure (A, B), la rigidité étant déterminée à l'aide d'une fonction de transfert du débitmètre Coriolis (2) valable dans des conditions de résonance pour un état "non colmaté", et
la fonction de transfert mettant en relation une grandeur d'entrée d'excitation, notamment une tension d'excitation appliquée à l'au moins un excitateur (8), avec un signal de mesure représentant les vibrations mécaniques, notamment avec une tension de capteur mise à disposition par l'au moins un capteur (14, 16)

12. Procédé selon la revendication 10 ou 11, **caractérisé en ce qu'**au cours de l'étape d'analyse est déterminé un écart des fréquences de résonance, seulement lorsque la différence de l'élasticité réduite déterminée avec l'élasticité déterminée dans l'état "non colmaté" et/ou
lorsque la différence de la rigidité dans l'état "non colmaté" avec la rigidité accrue déterminée, dépasse un seuil prédéfini.

13. Procédé selon l'une des revendications 9 à 12, **caractérisé en ce qu'**au cours de l'étape d'analyse n'est pas déterminé un écart des fréquences de résonance lorsque les fluctuations de la fréquence d'excitation, qui est réglée sur une fréquence de résonance du système vibrant (20), augmentent, notamment lorsque ces fluctuations de fréquence dépassent un seuil prédéfini.

14. Procédé selon l'une des revendications 10 à 13, **caractérisé en ce qu'**au cours de l'étape d'analyse n'est pas déterminé un écart des fréquences de résonance lorsqu'apparaissent une réduction lente de l'élasticité et/ou une augmentation lente de la rigidité, notamment sous un seuil prédéfini et pendant une période de temps prédéfinie.

**15.** Débitmètre Coriolis, lequel est insérable dans une conduite et est conçu de telle sorte à pouvoir déterminer à travers celui-ci une grandeur mesurée physique, notamment un débit massique, une viscosité et/ou une densité d'un fluide circulant dans la conduite,

le débitmètre Coriolis comportant

au moins deux tubes de mesure (A, B), sur lesquels un fluide circulant dans la conduite peut être réparti, au moins un excitateur (8), par l'intermédiaire duquel les au moins deux tubes de mesure (A, B) peuvent être excités en vibrations mécaniques, et

au moins un capteur (14, 16, lequel permet de détecter les vibrations mécaniques des tubes de mesure (A, B) et de générer l'au moins un signal de mesure représentant les vibrations mécaniques,

pour lequel une électronique (18) du débitmètre Coriolis, par l'intermédiaire de laquelle l'au moins un signal de mesure est traité, est conçue de telle manière à analyser un signal de mesure généré en vue de l'apparition d'un écart d'une fréquence de résonance d'un tube de mesure (A, B) par rapport à une fréquence de résonance de l'au moins autre tube de mesure (B, A) et, en cas d'apparition d'un tel écart, détermine un colmatage du tube de mesure (A, B).

Fig. 1

Fig. 2

Fig. 3

FREQUENZ DER SCHWINGUNG [Hz]

Fig. 4

Fig. 5

Fig. 6

Fig. 7

Fig. 8

EP 2 427 738 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7421350 B2